# EUROPEAN PATENT SPECIFICATION

(11) **EP 4 648 191 B1**
(45) Date of publication and mention of the grant of the patent: **09.09.2026**
(21) Application number: 24216847.4
(22) Date of filing: 02.12.2024
(51) Int. Cl.: H01M 50/213, H01M 10/613, H01M 50/124, H01M 10/643, H01M 10/6551, H01M 10/653, H01M 50/107, H01M 50/507

(54) **BATTERY DEVICE**
BATTERIEVORRICHTUNG
DISPOSITIF DE BATTERIE

(30) Priority: 10.05.2024 CN 202421012702 U
(43) Date of publication of application: 12.11.2025
(73) Proprietor: CALB Group Co., Ltd., Changzhou City, Jiangsu Province (CN)
(72) Inventor: ZHANG, Yongjie, Changzhou City, Jiangsu Province (CN); DU, Guoyi, Changzhou City, Jiangsu Province (CN); QI, Binwei, Changzhou City, Jiangsu Province (CN); LIU, Congyi, Changzhou City, Jiangsu Province (CN)
(74) Representative: Becker, Eberhard

(56) References cited:
- EP-A1- 4 287 373
- US-A1- 2010 167 094
- US-A1- 2019 109 356

## Description

### Technical Field

The present disclosure relates to the technical field of batteries, and in particular to a battery device.

### Background Art

In the related art, a battery device includes a plurality of batteries, and a short circuit is likely to occur between adjacent batteries.

It should be noted that the information disclosed in the above-described background section is only for enhancing understanding of the background of the present disclosure, and thus may include information that does not constitute prior art known to a person skilled in the art.

US 2019/109356 A1 discloses a battery device according to the preamble of the appended claim 1.

### Summary of the Invention

The disclosure provides a battery device, which can improve the technical problem that adjacent batteries are easily short-circuited.
The battery device includes:
a plurality of cylindrical batteries, the cylindrical battery including a battery housing and an insulating coating formed on an outer surface of the battery housing,
wherein a minimum distance between adjacent cylindrical batteries is h1, a thickness of the insulating coating is d, and d*h1 is 0.04 mm²-0.64 mm².

In the disclosure, by comprehensively adjusting the relationship between h1 and d, the insulation performance between adjacent batteries can be guaranteed. When the minimum distance h1 between adjacent cylindrical batteries is too small, short circuit easily occurs between cylindrical batteries. The disclosure defines that d*h1 is greater than 0.04 mm², that is, the thickness d of the insulating coating is set to be larger. This setting can reduce the risk of short circuit of adjacent cylindrical batteries. When the thickness d of the insulating coating is too small, short circuit also easily occurs between cylindrical batteries. The disclosure limits d*h1 to be greater than 0.04 mm², that is, the minimum distance h1 between adjacent cylindrical batteries is set to be larger. This setting can also reduce the risk of short circuit of adjacent cylindrical batteries. Furthermore, if d*h1 is too large, h1 is too large, and/or d is too large. When h1 is too large, the space utilization rate inside the battery device is relatively low, and the energy density of the battery device is relatively low. When d is too large, it is not easy for the cylindrical battery to dissipate heat and the coating process of the insulating coating takes a long time. The disclosure sets d*h1 as a suitable range, which can not only reduce the risk of short circuit of adjacent cylindrical batteries, but also improve the energy density of the battery device, improve the heat dissipation speed of the cylindrical battery, and improve the coating rate of the insulating coating.

It is to be understood that both the foregoing general description and the following detailed description are exemplary and explanatory only and are not restrictive of the disclosure.

### Brief Description of the Drawings

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views. In the drawings:
FIG. 1 is a schematic structural diagram of an exemplary embodiment of a battery device of the present disclosure;
FIG. 2 is a cross-sectional diagram of the battery device shown in FIG. 1 along the A-A dotted line;
FIG. 3 is a side diagram of the battery device shown in FIG. 2;
FIG. 4 is an enlarged diagram of the partial region B of the battery device shown in FIG. 3;
FIG. 5 is a schematic structural diagram of a cylindrical battery before being coated with an insulating coating in an exemplary embodiment of the battery device of the present disclosure;
FIG. 6 is a schematic structural diagram of a cylindrical battery after being coated with an insulating coating in an exemplary embodiment of the battery device of the present disclosure;
FIG. 7 is a partial schematic structural diagram of an exemplary embodiment of the battery device of the present disclosure; and
FIG. 8 is a schematic structural diagram of another exemplary embodiment of a battery device of the present disclosure.

### Description of reference numerals:

### Names for the reference numerals

1, cylindrical battery; 11, battery housing; 111, end wall; 1111, first end wall; 112, peripheral wall; 2, insulating coating; 3, main housing; 31, bottom wall; 32 arc-shaped chamfered portion; 4, battery case; 41, bottom plate; 5, battery layer; 6, battery column; 8, welding position.

### Detailed Description of the Invention

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the appended claims.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

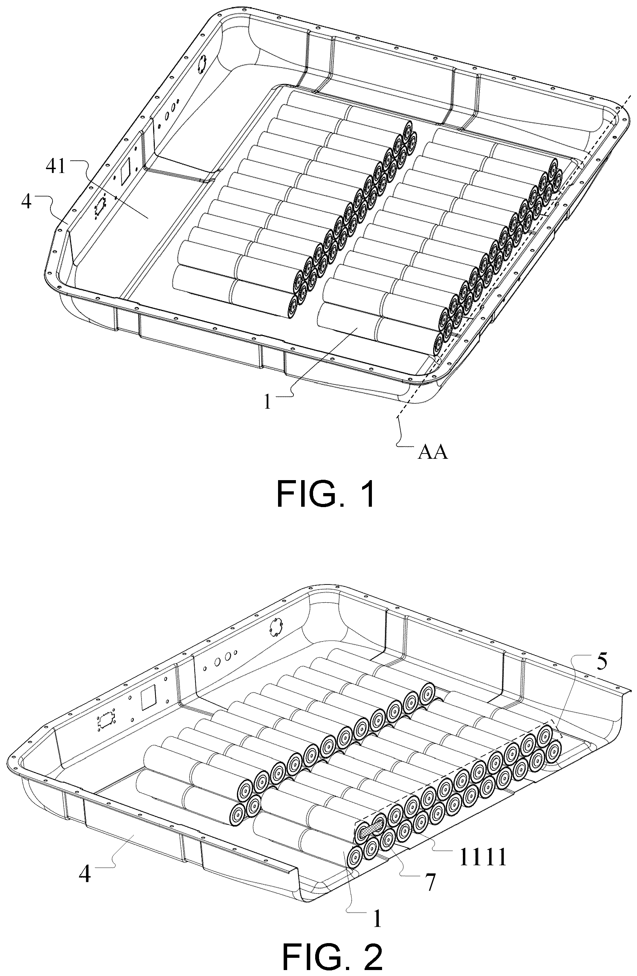

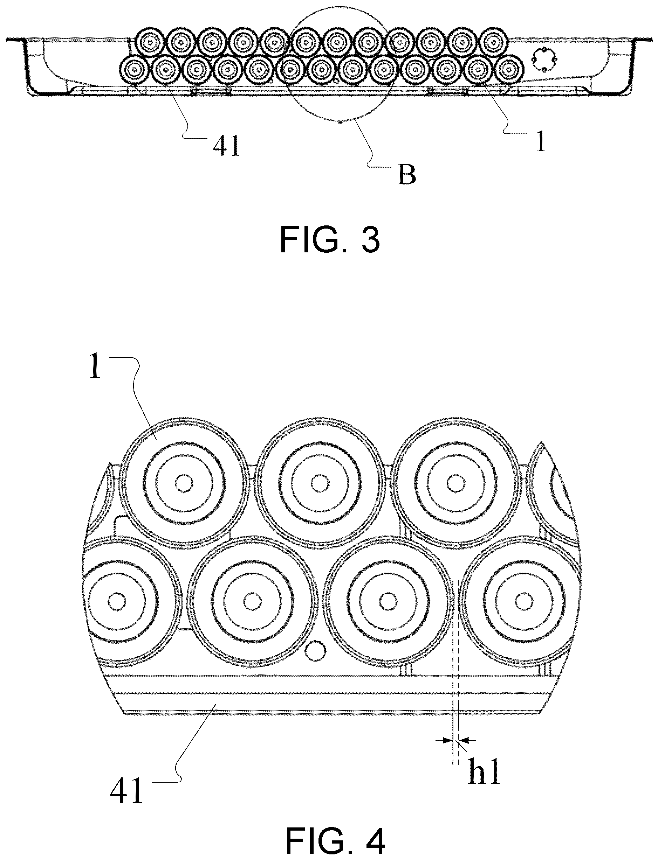

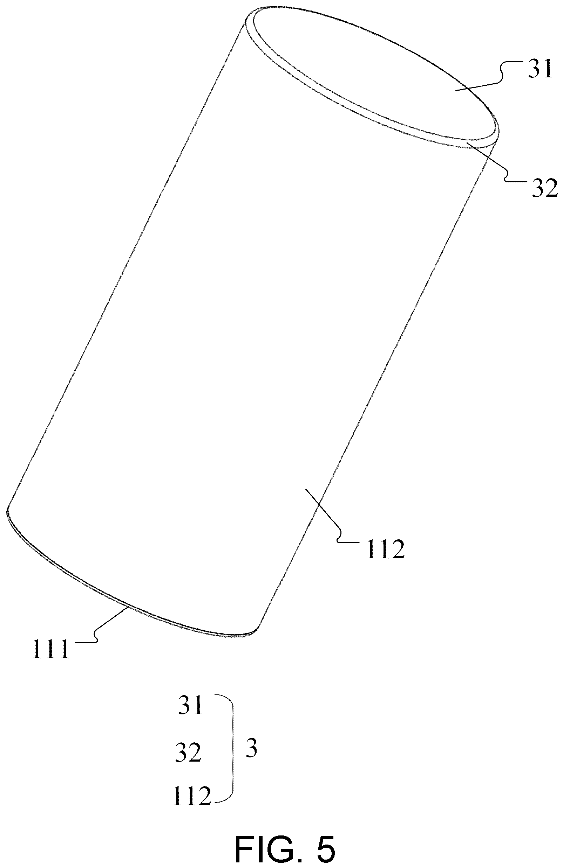

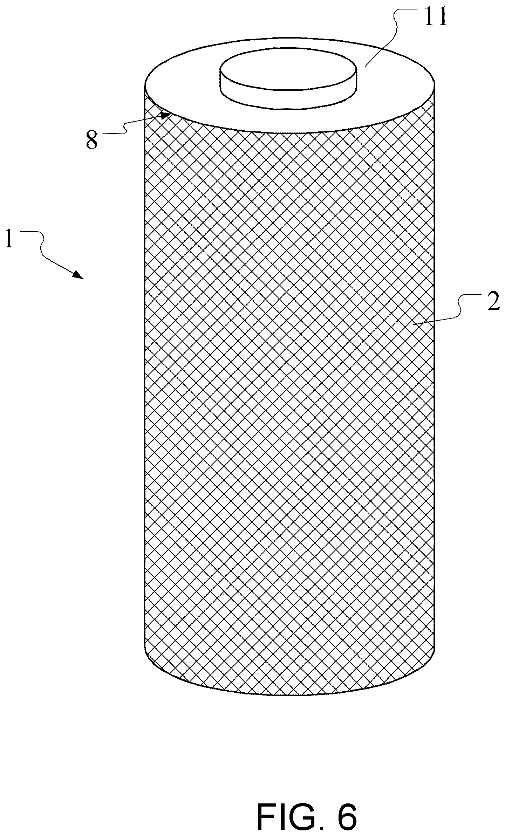

As shown in FIGs. 1-6, FIG. 1 is a schematic structural diagram of an exemplary embodiment of a battery device of the present disclosure; FIG. 2 is a cross-sectional diagram of the battery device shown in FIG. 1 along the A-A dotted line; FIG. 3 is a side diagram of the battery device shown in FIG. 2; FIG. 4 is an enlarged diagram of the partial region B of the battery device shown in FIG. 3; FIG. 5 is a schematic structural diagram of a cylindrical battery before being coated with an insulating coating in an exemplary embodiment of the battery device of the present disclosure; and FIG. 6 is a schematic structural diagram of a cylindrical battery after being coated with an insulating coating in an exemplary embodiment of the battery device of the present disclosure.

The battery device includes: a plurality of cylindrical batteries 1, the cylindrical battery 1 including a battery housing 11 and an insulating coating 2 formed on an outer surface of the battery housing 11, wherein a minimum distance between adjacent cylindrical batteries 1 is h1, a thickness of the insulating coating 2 is d, and d*h1 is 0.04 mm²-0.64 mm².

In the present exemplary embodiment, when the minimum distance h1 between adjacent cylindrical batteries 1 is too small, short circuit easily occurs between cylindrical batteries 1. the present exemplary embodiment defines that d*h1 is greater than 0.04 mm², that is, the thickness d of the insulating coating 2 is set to be larger. This setting can reduce the risk of short circuit of adjacent cylindrical batteries 1. When the thickness d of the insulating coating 2 is too small, short circuit also easily occurs between cylindrical batteries 1. the present exemplary embodiment limits d*h1 to be greater than 0.04 mm², that is, the minimum distance h1 between adjacent cylindrical batteries is set to be larger. This setting can also reduce the risk of short circuit of adjacent cylindrical batteries 1. Furthermore, if d*h1 is too large, h1 is too large, and/or d is too large. When h1 is too large, the space utilization rate inside the battery device is relatively low, and the energy density of the battery device is relatively low. When d is too large, it is not easy for the cylindrical battery to dissipate heat and the coating process of the insulating coating takes a long time. This exemplary embodiment sets d*h1 as a suitable range, which can not only reduce the risk of short circuit of adjacent cylindrical batteries 1, but also improve the energy density of the battery device, improve the heat dissipation speed of the cylindrical battery 1, and improve the coating rate of the insulating coating.

In the present exemplary embodiment, the minimum distance between the adjacent cylindrical batteries 1 is the minimum distance between the insulating coatings on the outer surfaces of the adjacent cylindrical batteries 1. The minimum distance between different sets of adjacent cylindrical batteries 1 may be the same or different. The minimum distance between adjacent cylindrical batteries 1 is L1-L2-2*L3, wherein L1 is a distance between centers of adjacent cylindrical batteries, L2 is a diameter of the cylindrical battery, and L3 is a thickness of the insulating coating.

In the present exemplary embodiment, the insulating coating 2 may be formed on the outer surface of the battery housing by a process such as spraying, coating, electrophoresis, etc., the insulating coating 2 may be formed on the outer surface of the battery housing 11 more uniformly, and the insulating coating 2 does not form wrinkles at edges and corners of the battery housing. In the present exemplary embodiment, the insulating coating may be a polyethylene (PE) coating, a polyurethane (PU) coating, an epoxy (EP) coating, a potassium silicate coating, a silicone coating, or the like.

In the present exemplary embodiment, d*h1 may be equal to 0.04 mm², 0.05 mm², 0.06 mm², 0.07 mm², 0.08 mm², 0.10 mm², 0.12 mm², 0.14 mm², 0.16 mm², 0.18 mm², 0.20 mm², 0.22 mm², 0.24 mm², 0.26 mm², 0.28 mm², 0.30 mm², 0.32 mm², 0.34 mm², 0.36 mm², 0.38 mm², 0.40 mm², 0.42 mm², 0.44 mm², 0.46 mm², 0.48 mm², 0.5 mm², 0.52 mm², 0.54 mm², 0.56 mm², 0.58 mm², 0.6 mm², 0.62 mm², 0.64 mm², etc.

In the present exemplary embodiment, the battery housing 11 may include two end walls 111 provided oppositely and a peripheral wall 112 connected between the two end walls 111, the peripheral wall 112 is welded to at least one of the end walls 111, and the insulating coating 2 is not provided at a welding position 8 of the peripheral wall 112 and the end wall 111, wherein d*h1 is 0.08 mm²-0.64 mm². For example, d*h1 may be equal to 0.08 mm², 0.10 mm², 0.12 mm², 0.14 mm², 0.16 mm², 0.18 mm², 0.20 mm², 0.22 mm², 0.24 mm², 0.26 mm², 0.28 mm², 0.30 mm², 0.32 mm², 0.34 mm², 0.36 mm², 0.38 mm², 0.40 mm², 0.42 mm², 0.44 mm², 0.46 mm², 0.48 mm², 0.5 mm², 0.52 mm², 0.54 mm², 0.56 mm², 0.58 mm², 0.6 mm², 0.62 mm², 0.64 mm², etc. The controlled range of d*h1 is larger, which can reduce the risk of short circuit in the welding area.

In the present exemplary embodiment, the insulating coating 2 may first be formed on the outer surface of the battery housing 11, and then welding of the peripheral wall and the end wall is performed. The insulating coating is formed first and then welded. When the material of the housing is fed, the insulating coating has already been formed on the battery housing, which can avoid spraying the insulating coating after the subsequent process that a cell is assembled into the battery housing, thereby avoiding the damage to the cell during the process of thermal curing of the insulating coating.

In the present exemplary embodiment, in order to prevent the insulating coating from affecting the welding effect of the battery housing, the insulating coating 2 is not provided at a welding position 8 of the peripheral wall 112 and the end wall 111. Accordingly, the welding position 8 of the peripheral wall 112 and the end wall 111 is easily short-circuited with an adjacent cylindrical battery, and in order to reduce the risk of short-circuit of the adjacent cylindrical batteries, the present exemplary embodiment sets the range of d*h1 to be larger, that is, the risk of short circuit of the adjacent cylindrical batteries is reduced by increasing the minimum distance h1 between the adjacent cylindrical batteries 1 or increasing the thickness of the insulating coating 2. In the present exemplary embodiment, a pole assembly may be provided on the end wall 111, and the pole is used as a high-voltage output end, and it is more necessary to ensure the insulating gap between adjacent batteries in an area where the insulating coating is not provided.

In the present exemplary embodiment, the insulating coating may be formed on at least a part of the outer surface of the peripheral wall 112, and the insulating coating may be formed on at least a part of the outer surface of the end wall 111.

In the present exemplary embodiment, the thickness of the insulating coating 2 on the arc-shaped chamfered portion 32 is smaller than the thickness of the insulating coating (2) on the peripheral wall 112, and d*h1 is greater than or equal to 0.06 mm² and less than or equal to 0.64 mm². For example, d*h1 may be equal to 0.06 mm², 0.07 mm², 0.08 mm², 0.10 mm², 0.12 mm², 0.14 mm², 0.16 mm², 0.18 mm², 0.20 mm², 0.22 mm², 0.24 mm², 0.26 mm², 0.28 mm², 0.30 mm², 0.32 mm², 0.34 mm², 0.36 mm², 0.38 mm², 0.40 mm², 0.42 mm², 0.44 mm², 0.46 mm², 0.48 mm², 0.5 mm², 0.52 mm², 0.54 mm², 0.56 mm², 0.58 mm², 0.6 mm², 0.62 mm², 0.64 mm², etc. In order to ensure the insulation performance at the position of the arc-shaped chamfered portion 32, when the thickness of the insulating coating on the arc-shaped chamfered portion 32 is relatively thin, the minimum distance between the adjacent cylindrical batteries 1 can be appropriately increased.

In the present exemplary embodiment, the minimum distance between two adjacent cylindrical batteries 1 at the welding position of the peripheral wall 112 and the end wall 111 is h2, and h2/h1 is greater than 1 and less than or equal to 3. For example, h2/h1 may be equal to 1.1, 1.2, 1.3, 1.4, 1.5, 1.6, 1.7, 1.8, 1.9, 2, 2.1, 2.2, 2.3, 2.4, 2.5, 2.6, 2.7, 2.8, 2.9, 3, etc. The welding position itself is prone to insulation failure. If h2/h1 is too small, the minimum distance between the two adjacent cylindrical batteries 1 at the welding position of the peripheral wall 112 and the end wall 111 is too small, and the adjacent cylindrical batteries are prone to short circuit. If h2/h1 is too large, the minimum distance between the two adjacent cylindrical batteries 1 at the welding position of the peripheral wall 112 and the end wall 111 is too large, the space utilization rate inside the battery device is relatively low, and the energy density of the battery device is relatively low. In the present exemplary embodiment, h2/h1 is set to a suitable size, which can not only reduce the risk of short circuit of adjacent cylindrical batteries, but also ensure the energy density of the battery device.

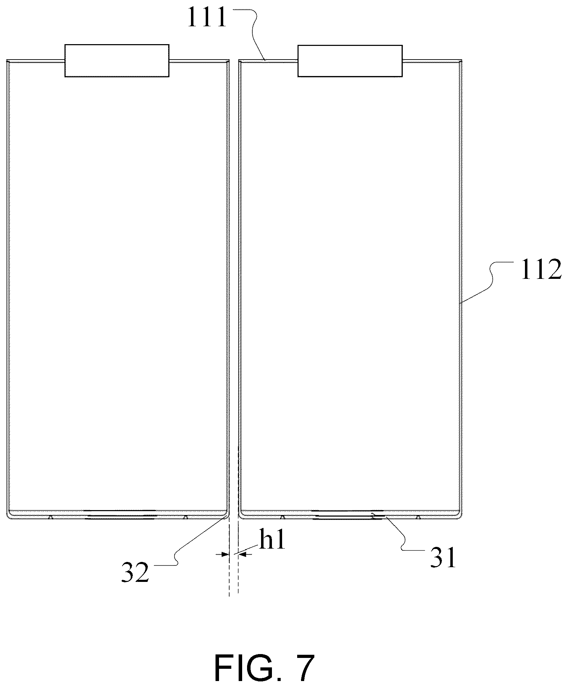

In the present exemplary embodiment, FIG. 7 is a partial schematic structural diagram of an exemplary embodiment of the battery device of the present disclosure. The battery housing 11 includes: an integrally formed main housing 3 including a bottom wall 31, a peripheral wall 112, and an arc-shaped chamfered portion 32 connected between the bottom wall 31 and the peripheral wall 112, an opening being formed on the main housing 3, the bottom wall 31 and the opening being provided oppositely, an end, facing away from the bottom wall 31, of the peripheral wall 112 forming the opening, and the bottom wall 31 forming one end wall of the battery housing.

In the present exemplary embodiment, as shown in FIGs. 1-6, the battery device further includes: a battery case 4 including a bottom plate 41 for supporting the cylindrical battery 1; the plurality of cylindrical batteries 1 form a plurality of battery layers 5, the battery layer 5 including a plurality of cylindrical batteries 1 distributed in a direction parallel to the bottom plate 41, the plurality of battery layers 5 being distributed in a direction perpendicular to the bottom plate 41, wherein an axial direction of the cylindrical battery 1 is parallel to the bottom plate 41, and a part of a structure of at least a part of the cylindrical batteries 1 in the battery layer is embedded in a gap between two adjacent cylindrical batteries 1 in adjacent battery layers 5. The minimum distance between adjacent cylindrical batteries 1 is slightly smaller, and the thickness of the insulating coating needs to be set larger. Correspondingly, d*h1 is 0.1 mm²-0.48 mm². For example, d*h1 may be equal to 0.1 mm², 0.12 mm², 0.14 mm², 0.16 mm², 0.18 mm², 0.20 mm², 0.22 mm², 0.24 mm², 0.26 mm², 0.28 mm², 0.30 mm², 0.32 mm², 0.34 mm², 0.36 mm², 0.38 mm², 0.40 mm², 0.42 mm², 0.44 mm², 0.46 mm², 0.48 mm², etc.

In the present exemplary embodiment, the gap between adjacent cylindrical batteries is 1 mm-3 mm. For example, the gap between adjacent cylindrical batteries may be equal to 1 mm, 2 mm, 3 mm, etc.

In the present exemplary embodiment, a part of the structure of at least a part of the cylindrical batteries 1 is embedded in the gap between two adjacent cylindrical batteries 1 of adjacent battery layers 5. If the minimum distance h1 between the adjacent cylindrical batteries 1 is too large, the quantity of cylindrical batteries that can be provided inside the battery device is relatively low. In the present exemplary embodiment, setting d*h1 to an appropriate size can improve the space utilization rate inside the battery device.

The bottom plate 41 may directly support the cylindrical battery or indirectly support the cylindrical battery. For example, a support frame may be provided between the bottom plate and the battery to support the battery, and the support frame and the bottom plate may be fixedly connected to each other.

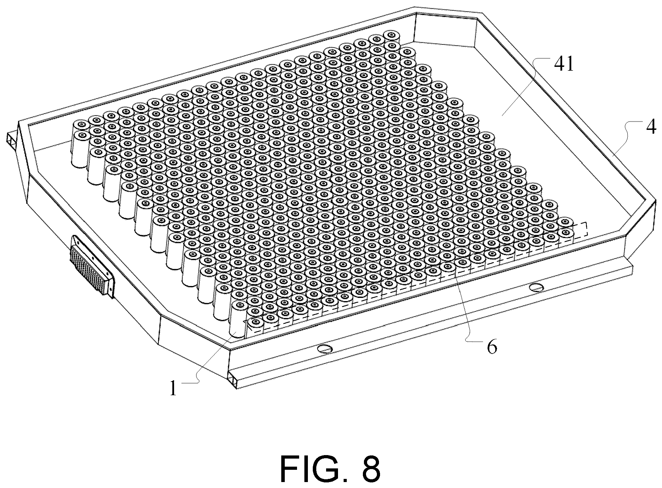

It should be understood that in other exemplary embodiments, the cylindrical batteries 1 may also be distributed in other ways, for example, as shown in FIG. 8, which is a schematic structural diagram of another exemplary embodiment of the battery device of the present disclosure. The axial direction of the cylindrical battery 1 may be perpendicular to the bottom plate 41, the plurality of cylindrical batteries 1 form a plurality of rows of battery columns 6, each row of battery columns 6 includes a plurality of cylindrical batteries 1 distributed along a same direction, and a part of the structure of at least a part of the cylindrical batteries 1 is embedded in the gap between two adjacent cylindrical batteries 1 in adjacent battery columns.

In the present exemplary embodiment, as shown in FIGs. 1-8, the two end walls 111 include a first end wall 1111, the battery device further includes a busbar 7 for electrically connecting the first end wall 1111, and an overlapping area of an orthographic projection of the busbar 7 on the first end wall 1111 with the first end wall 1111 is S, wherein S/d is 43.8 mm-87.5 mm. For example, S/d may be equal to 43.8 mm, 45 mm, 47 mm, 49 mm, 51 mm, 53 mm, 55 mm, 57 mm, 59 mm, 61 mm, 63 mm, 65 mm, 67 mm, 69 mm, 71 mm, 73 mm, 75 mm, 77 mm, 79 mm, 81 mm, 83 mm, 85 mm, 87.5 mm, etc.

In the present exemplary embodiment, the cylindrical battery mainly dissipates heat through the busbar 7 and the peripheral wall 112, and the larger S is, the better the heat dissipation effect of the cylindrical battery 1 through the busbar 7 is; and the smaller the thickness of the insulating coating 2 is, the better the heat dissipation effect of the cylindrical battery through the peripheral wall 112 is. In the present exemplary embodiment, S/d is set to a suitable size, and when S is too small, d will not be too large; and when d is too large, S will not be too small. This setting can ensure that the cylindrical battery has a good heat dissipation effect. In the present exemplary embodiment, S/d is set in a suitable range, and the heat dissipation effect of the end walls and the peripheral wall is comprehensively adjusted: when S is relatively large, the heat dissipation effect of the end walls is good, and a coating thickness of the peripheral wall can be set thicker; when the S is relatively small, the heat dissipation effect of the end walls is poor, and the coating thickness of the peripheral wall cannot be too large, which is not conducive to the heat dissipation of the peripheral wall.

In the present exemplary embodiment, the battery includes a positive plate including a positive current collector and a cathode active material layer located on a side surface of the positive current collector, and an area density of the cathode active material layer on the positive plate is A, wherein d*h1/A is 0.0003 mm*mm/(g/m²)-0.007 mm*mm/(g/m²). For example, when a unit of d*h1/A is mm*mm/(g/m²), a numerical value of d*h1/A may be equal to 0.0003, 0.0004, 0.0005, 0.0006, 0.0007, 0.0008, 0.0009, 0.001, 0.002, 0.003, 0.004, 0.005, 0.006, 0.007, etc.

In the present exemplary embodiment, if d*h1/A is too small, the area density of the cathode active material layer on the positive plate is relatively large, the heat generation of the battery is relatively large, the thickness of the insulating coating is relatively thin, the minimum distance between adjacent cylindrical batteries is relatively small, the heat transfer speed of the adjacent cylindrical batteries through the peripheral surface is relatively fast, and the battery device is easy to cause thermal runaway diffusion relatively; if d*h1/A is too large, the thickness of the insulating coating is relatively thick, the heat dissipation speed of the cylindrical battery is relatively slow, the minimum distance between adjacent cylindrical batteries is relatively large, the internal space utilization rate of the battery device is relatively low, the area density of the cathode active material layer on the positive plate is too small, and the energy density of a single cylindrical battery is too low. In the present exemplary embodiment, d*h1/A is set to a suitable size, which can not only reduce the risk of thermal runaway diffusion of the battery device, but also reduce the risk of short circuit of adjacent cylindrical batteries, increase the energy density of a single cylindrical battery, and increase the heat dissipation speed of a single cylindrical battery.

The cathode active material layer may be provided on one surface or both surfaces of the positive current collector. The area density of the cathode active material layer on the positive plate is a total mass of the cathode active material layer on the positive plate per unit area after a single positive plate is flattened. When the cathode active material layer is provided on one side of the positive current collector, the total mass of the cathode active material layer on the positive plate per unit area is a total mass of the cathode active material layer on one side of the positive plate; and when the cathode active material layers are provided on both sides of the positive current collector, the total mass of the cathode active material layers on the positive plate per unit area is a total mass of the cathode active material layers on both sides of the positive plate. The area density test method may include: cutting the pole piece out of a wafer with a radius of 2 cm on a wafer cutting machine, and weighing a mass of the wafer on an analytical balance. The area density of the cathode active material layer is equal to (G1-G2)/M, G1 is a mass of the wafer, G2 is a mass of the positive current collector in the wafer, and M is an area of the wafer.

In the present exemplary embodiment, the thickness of the insulating coating 2 is 0.08 mm-0.16 mm. For example, the thickness of the insulating coating 2 may be 0.08 mm, 0.09 mm, 0.10 mm, 0.11 mm, 0.12 mm, 0.13 mm, 0.14 mm, 0.15 mm, 0.16 mm, etc.

In the present exemplary embodiment, the battery housing 11 may include aluminum, and, for example, the battery housing 11 may be an aluminum housing or an aluminum alloy housing. The aluminum material is relatively soft. When the battery housing expands, the gap between adjacent batteries becomes smaller. The thickness of the insulating coating needs to be set larger. Correspondingly, d*h1 is 0.1 mm²-0.64 mm². For example, d*h1 can be equal to 0.1 mm², 0.12 mm², 0.14 mm², 0.16 mm², 0.18 mm², 0.20 mm², 0.22 mm², 0.24 mm², 0.26 mm², 0.28 mm², 0.30 mm², 0.32 mm², 0.34 mm², 0.36 mm², 0.38 mm², 0.40 mm², 0.42 mm², 0.44 mm², 0.46 mm², 0.48 mm², 0.5 mm², 0.52 mm², 0.54 mm², 0.56 mm², 0.58 mm², 0.6 mm², 0.62 mm², 0.64 mm², etc.

Note that the battery includes a cell and an electrolyte, and the battery is a minimum unit capable of performing an electrochemical reaction such as charge/discharge. A cell refers to a unit formed by winding or laminating a stack comprising a first pole piece, a partition material, and a second pole piece. When the first pole piece is a positive plate, the second pole piece is a negative plate. The polarities of the first pole piece and the second pole piece may be interchanged.

In the present exemplary embodiment, the battery may be a lithium ion battery, and it should be understood that in other exemplary embodiments, the battery may also be a cadmium nickel battery, a nickel metal hydride battery, a lithium polymer battery, a sodium ion battery, a solid state battery, or the like.

The present exemplary embodiment also provides a battery device, which is a battery module or a battery pack.

The battery module includes a plurality of batteries, the batteries may be cylindrical batteries, and the cylindrical batteries may be provided on a pallet (bottom plate) to form the battery module.

The battery pack includes a plurality of batteries and a case for fixing the plurality of batteries.

Note that the battery pack includes a plurality of batteries, and the plurality of batteries are provided in the case. The plurality of batteries may form a battery module and then be mounted in the case. Alternatively, the plurality of batteries may be provided directly within the case, without grouping the plurality of batteries, and the case may be used to fix the plurality of batteries.

It should be noted that the battery device proposed by the disclosure can be used in various electrical devices, such as mobile phones, portable devices, notebook computers, various vehicles (such as battery cars, electric vehicles, etc.), ships, spacecraft, electric toys and electric tools, and the like. Further, the aforementioned spacecraft may include, for example, an airplane, a rocket, a space shuttle, a spacecraft, and the like. The aforementioned electric toys may include, for example, stationary or mobile electric toys (for example, gaming machines, electric vehicle toys, electric ship toys, electric airplane toys, and the like). The above-described electric tools may include, for example, a metal cutting electric tool, a grinding electric tool, an assembly electric tool, and a railway electric tool, and specifically, for example, an electric drill, an electric grinder, an electric wrench, an electric screwdriver, an electric hammer, an impact electric drill, a concrete vibrator, and an electric planer. It should be understood that in various possible embodiments consistent with the design concept of the present disclosure, the cylindrical battery or battery device proposed by the present disclosure is not only limited to the above-described appliances, but also can be applied to all appliances using batteries. For the sake of simplicity of description, each embodiment in the present specification will be described with reference to a vehicle as an example.

## Claims

1. A battery device comprising:
a plurality of cylindrical batteries (1), the cylindrical battery (1) comprising a battery housing (11) and an insulating coating (2) formed on an outer surface of the battery housing (11),
**characterized in that**
a minimum distance between adjacent cylindrical batteries (1) is h1, a thickness of the insulating coating (2) is d, and d*h1 is 0.04 mm²-0.64 mm².

2. The battery device according to claim 1, **characterized in that** the battery housing (11) comprises two end walls (111) provided oppositely and a peripheral wall (112) connected between the two end walls (111), the peripheral wall (112) is welded to at least one of the end walls (111), and the insulating coating (2) is not provided at a welding position of the peripheral wall (112) and the end wall (111), wherein d*h1 is 0.08 mm²-0.64 mm².

3. The battery device according to claim 2, **characterized in that** the minimum distance between two adjacent cylindrical batteries (1) at the welding position of the peripheral wall (112) and the end wall (111) is h2, and h2/h1 is greater than 1 and less than or equal to 3.

4. The battery device according to claim 1, **characterized in that** the battery housing (11) comprises: an integrally formed main housing (3) comprising a bottom wall (31), a peripheral wall (112), and an arc-shaped chamfered portion (32) connected between the bottom wall (31) and the peripheral wall (112), an opening being formed on the main housing (3), the bottom wall (31) and the opening being provided oppositely, an end, facing away from the bottom wall (31), of the peripheral wall (112) forming the opening, and the bottom wall (31) forming the end wall of the battery housing; and
the thickness of the insulating coating (2) on the arc-shaped chamfered portion (32) is smaller than the thickness of the insulating coating (2) on the peripheral wall (112), and d*h1 is greater than or equal to 0.06 mm² and less than or equal to 0.64 mm².

5. The battery device according to claim 1, **characterized by** further comprising:
a bottom plate (41) for supporting the cylindrical battery (1);
a plurality of the cylindrical batteries (1) forming a plurality of battery layers (5), the battery layer (5) comprising a plurality of cylindrical batteries (1) distributed in a direction parallel to the bottom plate (41), the plurality of the battery layers (5) being distributed in a direction perpendicular to the bottom plate (41);
wherein an axial direction of the cylindrical battery (1) is parallel to the bottom plate (41), and at least a part of a structure of at least a part of the cylindrical batteries (1) in the battery layer (5) is embedded in a gap between two adjacent cylindrical batteries (1) in adjacent battery layers (5); and
d*h1 is 0.1 mm²-0.48 mm².

6. The battery device according to claim 1 or 5, **characterized in that** a gap between the adjacent cylindrical batteries is 1 mm-3 mm.

7. The battery device according to claim 1, **characterized in that** the battery housing (11) comprises two end walls (111) provided oppositely, the two end walls (111) comprising a first end wall (1111), the battery device further comprising:
a busbar (7) for electrically connecting the first end wall (1111), an overlapping area of an orthographic projection of the busbar (7) on the first end wall (1111) with the first end wall (1111) being S, wherein S/d is 43.8 mm-87.5 mm.

8. The battery device according to claim 1, **characterized in that** the battery comprises a positive plate comprising a positive current collector and a cathode active material layer located on a side surface of the positive current collector, and an area density of the cathode active material layer on the positive plate is A, wherein d*h1/A is 0.0003 mm*mm/(g/m²)-0.007 mm*mm/(g/m²).

9. The battery device according to claim 1, **characterized in that** the thickness of the insulating coating (2) is 0.08 mm-0.16 mm.

10. The battery device according to claim 1, **characterized in that** the battery housing (11) comprises aluminum; and
d*h1 is 0.1 mm²-0.64 mm².

## Patentansprüche

1. Batterievorrichtung, umfassend:
eine Vielzahl zylindrischer Batterien (1), wobei die zylindrische Batterie (1) ein Batteriegehäuse (11) und eine auf einer Außenfläche des Batteriegehäuses (11) gebildete isolierende Beschichtung (2) umfasst,
**dadurch gekennzeichnet, dass** ein Mindestabstand zwischen angrenzenden zylindrischen Batterien (1) h1 beträgt, eine Dicke der isolierenden Beschichtung (2) d beträgt und d*h1 0,04 mm² bis 0,64 mm² beträgt.

2. Batterievorrichtung nach Anspruch 1, **dadurch gekennzeichnet, dass** das Batteriegehäuse (11) zwei gegenüberliegend vorgesehene Stirnwände (111) und eine zwischen den beiden Stirnwänden (111) verbundene Umfangswand (112) umfasst, die Umfangswand (112) mit mindestens einer der Stirnwände (111) verschweißt ist und die isolierende Beschichtung (2) an einer Schweißstelle der Umfangswand (112) und der Stirnwand (111) nicht vorhanden ist, wobei d*h1 0,08 mm² bis 0,64 mm² beträgt.

3. Batterievorrichtung nach Anspruch 2, **dadurch gekennzeichnet, dass** der Mindestabstand zwischen zwei angrenzenden zylindrischen Batterien (1) an der Schweißstelle der Umfangswand (112) und der Stirnwand (111) h2 beträgt und h2/h1 größer als 1 und kleiner oder gleich 3 ist.

4. Batterievorrichtung nach Anspruch 1, **dadurch gekennzeichnet, dass** das Batteriegehäuse (11) umfasst: ein einstückig geformtes Hauptgehäuse (3), umfassend eine Bodenwand (31), eine Umfangswand (112) und einen bogenförmigen abgeschrägten Abschnitt (32), der zwischen der Bodenwand (31) und der Umfangswand (112) verbunden ist, wobei an dem Hauptgehäuse (3) eine Öffnung gebildet ist, wobei die Bodenwand (31) und die Öffnung gegenüberliegend vorgesehen sind, ein von der Bodenwand (31) abgewandtes Ende der Umfangswand (112) die Öffnung bildet und die Bodenwand (31) die Stirnwand des Batteriegehäuses bildet; und
die Dicke der isolierenden Beschichtung (2) auf dem bogenförmigen abgeschrägten Abschnitt (32) geringer als die Dicke der isolierenden Beschichtung (2) auf der Umfangswand (112) ist, und d*h1 größer oder gleich 0,06 mm² und kleiner oder gleich 0,64 mm² ist.

5. Batterievorrichtung nach Anspruch 1, **dadurch gekennzeichnet, dass** sie ferner umfasst:
eine Bodenplatte (41) zum Tragen der zylindrischen Batterie (1);
eine Vielzahl der zylindrischen Batterien (1), die eine Vielzahl von Batterieschichten (5) bilden, wobei die Batterieschicht (5) eine Vielzahl von zylindrischen Batterien (1) umfasst, die in einer Richtung parallel zu der Bodenplatte (41) verteilt sind, wobei die Vielzahl der Batterieschichten (5) in einer Richtung senkrecht zu der Bodenplatte (41) verteilt sind;
wobei eine axiale Richtung der zylindrischen Batterie (1) parallel zu der Bodenplatte (41) verläuft und mindestens ein Teil einer Struktur mindestens eines Teils der zylindrischen Batterien (1) in der Batterieschicht (5) in einen Spalt zwischen zwei angrenzenden zylindrischen Batterien (1) in angrenzenden Batterieschichten (5) eingebettet ist; und
d*h1 0,1 mm² bis 0,48 mm² beträgt.

6. Batterievorrichtung nach Anspruch 1 oder 5, **dadurch gekennzeichnet, dass** ein Spalt zwischen den angrenzenden zylindrischen Batterien 1 mm bis 3 mm beträgt.

7. Batterievorrichtung nach Anspruch 1, **dadurch gekennzeichnet, dass** das Batteriegehäuse (11) zwei gegenüberliegend vorgesehene Stirnwände (111) umfasst, wobei die beiden Stirnwände (111) eine erste Stirnwand (1111) umfassen, wobei die Batterievorrichtung ferner umfasst:
eine Sammelschiene (7) zum elektrischen Verbinden der ersten Stirnwand (1111), wobei eine Überlappungsfläche einer orthografischen Projektion der Sammelschiene (7) auf die erste Stirnwand (1111) mit der ersten Stirnwand (1111) S beträgt, wobei S/d 43,8 mm bis 87,5 mm beträgt.

8. Batterievorrichtung nach Anspruch 1, **dadurch gekennzeichnet, dass** die Batterie eine positive Platte umfasst, die einen positiven Stromkollektor und eine auf einer Seitenfläche des positiven Stromkollektors angeordnete Kathodenaktivmaterialschicht umfasst, und eine Flächendichte der Kathodenaktivmaterialschicht auf der positiven Platte A beträgt, wobei d*h1/A 0,0003 mm*mm/(g/m²) bis 0,007 mm*mm/(g/m²) beträgt.

9. Batterievorrichtung nach Anspruch 1, **dadurch gekennzeichnet, dass** die Dicke der isolierenden Beschichtung (2) 0,08 mm bis 0,16 mm beträgt.

10. Batterievorrichtung nach Anspruch 1, **dadurch gekennzeichnet, dass** das Batteriegehäuse (11) Aluminium umfasst; und
d*h1 0,1 mm² bis 0,64 mm² beträgt.

## Revendications

1. Dispositif de batterie, comprenant :
une pluralité de batteries cylindriques (1), chaque batterie cylindrique (1) comprenant un boîtier de batterie (11) et un revêtement isolant (2) formé sur une surface extérieure du boîtier de batterie (11), **caractérisé en ce qu'**une distance minimale entre des batteries cylindriques adjacentes (1) est h1, l'épaisseur du revêtement isolant (2) est d, et d*h1 est compris entre 0,04 mm² et 0,64 mm².

2. Dispositif de batterie selon la revendication 1, **caractérisé en ce que** le boîtier de batterie (11) comprend deux parois d'extrémité (111) disposées de manière opposée et une paroi périphérique (112) reliant les deux parois d'extrémité (111), la paroi périphérique (112) est soudée à au moins l'une des parois d'extrémité (111), et le revêtement isolant (2) n'est pas présent au niveau d'une position de soudure entre la paroi périphérique (112) et la paroi d'extrémité (111), d*h1 étant compris entre 0,08 mm² et 0,64 mm².

3. Dispositif de batterie selon la revendication 2, **caractérisé en ce que** la distance minimale entre deux batteries cylindriques adjacentes (1) au niveau de la position de soudure de la paroi périphérique (112) et de la paroi d'extrémité (111) est h2, et h2/h1 est supérieur à 1 et inférieur ou égal à 3.

4. Dispositif de batterie selon la revendication 1, **caractérisé en ce que** le boîtier de batterie (11) comprend : un boîtier principal (3) formé d'un seul tenant, comprenant une paroi de fond (31), une paroi périphérique (112) et une partie chanfreinée en forme d'arc (32) reliant la paroi de fond (31) et la paroi périphérique (112), une ouverture étant formée sur le boîtier principal (3), la paroi de fond (31) et l'ouverture étant disposées en vis-à-vis, une extrémité de la paroi périphérique (112), opposée à la paroi de fond (31), formant l'ouverture, et la paroi de fond (31) formant la paroi d'extrémité du boîtier de batterie ; et l'épaisseur du revêtement isolant (2) sur la partie chanfreinée en forme d'arc (32) est inférieure à l'épaisseur du revêtement isolant (2) sur la paroi périphérique (112), et d*h1 est supérieur ou égal à 0,06 mm² et inférieur ou égal à 0,64 mm².

5. Dispositif de batterie selon la revendication 1, **caractérisé en ce qu'**il comprend en outre:
une plaque de fond (41) destinée à supporter la batterie cylindrique (1) ;
une pluralité de batteries cylindriques (1) formant une pluralité de couches de batteries (5), la couche de batteries (5) comprenant une pluralité de batteries cylindriques (1) réparties dans une direction parallèle à la plaque de fond (41), la pluralité de couches de batteries (5) étant répartie dans une direction perpendiculaire à la plaque de fond (41) ;
dans lequel la direction axiale de la batterie cylindrique (1) est parallèle à la plaque de fond (41), et au moins une partie de la structure d'au moins une partie des batteries cylindriques (1) dans la couche de batteries (5) est encastrée dans un interstice entre deux batteries cylindriques adjacentes (1) dans des couches de batteries adjacentes (5) ; et
d*h1 est compris entre 0,1 mm² et 0,48 mm².

6. Dispositif de batterie selon la revendication 1 ou 5, **caractérisé en ce que** le distance entre les batteries cylindriques adjacentes est compris entre 1 mm et 3 mm.

7. Dispositif de batterie selon la revendication 1, **caractérisé en ce que** le boîtier de batterie (11) comprend deux parois d'extrémité (111) disposées de manière opposée, les deux parois d'extrémité (111) comprenant une première paroi d'extrémité (1111), le dispositif de batterie comprenant en outre :
une barre omnibus (7) destinée à relier électriquement la première paroi d'extrémité (1111), la surface de chevauchement d'une projection orthogonale de la barre omnibus (7) sur la première paroi d'extrémité (1111) avec ladite première paroi d'extrémité (1111) étant égale à S, où S/d est compris entre 43,8 mm et 87,5 mm.

8. Dispositif de batterie selon la revendication 1, **caractérisé en ce que** la batterie comprend une plaque positive comprenant un collecteur de courant positif et une couche de matière active cathodique située sur une surface latérale du collecteur de courant positif, et la densité de surface de la couche de matière active cathodique sur la plaque positive est A, où d*h1/A est compris entre 0,0003 mm*mm/(g/m²) et 0,007 mm*mm/(g/m²).

9. Dispositif de batterie selon la revendication 1, **caractérisé en ce que** l'épaisseur du revêtement isolant (2) est comprise entre 0,08 mm et 0,16 mm.

10. Dispositif de batterie selon la revendication 1, **caractérisé en ce que** le boîtier de batterie (11) est en aluminium ; et
d*h1 est compris entre 0,1 mm² et 0,64 mm².
